# EUROPÄISCHE PATENTSCHRIFT

(11) **EP 2 805 925 B1**
(45) Veröffentlichungstag und Bekanntmachung des Hinweises auf die Patenterteilung: **17.04.2019**
(21) Anmeldenummer: 14002205.4
(22) Anmeldetag: 28.06.2012
(51) Int. Cl.: C03B 9/193, C03B 9/32, C03B 9/16, B65D 1/02

(54) **Vorrichtung zur Herstellung eines Hohlglaskörpers**
Device for producing a hollow glass body
Dispositif de fabrication d'un corps en verre creux

(43) Veröffentlichungstag der Anmeldung: 26.11.2014
(62) Teilanmeldung aus: 12173979.1
(73) Patentinhaber: Verallia Deutschland AG, 88410 Bad Wurzach (DE)
(72) Erfinder: Jaenecke, Stefan, 22607 Hamburg (DE)
(74) Vertreter: Lelgemann, Karl-Heinz

(56) Entgegenhaltungen:
- BE-A- 502 502
- DE-A1- 2 421 677
- DE-A1- 2 421 699
- DE-B1- 2 147 349
- GB-A- 424 393
- GB-A- 428 171
- US-A- 2 024 748
- US-A- 4 008 063
- US-A- 4 548 634

## Beschreibung

Die Erfindung bezieht sich auf eine Vorrichtung zur Herstellung eines Hohlglaskörpers mittels einer IS-Maschine, durch die der Hohlglaskörper im Press-Blas- oder im Blas-Blas-Prozess gefertigt wird.

Solche bekannten Vorrichtungen (siehe zum Beispiel GB 428 171 oder US 4 548 634) werden insbesondere in der Massenproduktion zur Herstellung von Hohlglaskörpern, wie Wasser- bzw. Bierflaschen od.dgl., eingesetzt. Die Hohlglaskörper weisen unterschiedlich groß bemessene Außenkonturen auf und werden üblicherweise mit sogenannten IS-Maschinen (individual section) hergestellt. Die IS-Maschinen zeichnen. sich dadurch aus, dass in einem ersten Vorform-Verfahrensschritt aus einem Glastropfen eine Vorform mit Hilfe eines Presshubes oder mit Hilfe von Druckluft erzeugt ist, die anschließend unmittelbar an eine benachbarte weitere Bearbeitungsstation der IS-Maschine übergeben wird, an der dann mit Hilfe eines Blasvorganges die endgültige Kontur des Hohlglaskörpers erzeugt ist, so dass Glashohlkörper mit Hinterschnitt hergestellt werden können. Dabei ist eine Vielzahl von solchen IS-Maschinen benachbart zueinander angeordnet, so dass in der Massenproduktion innerhalb zeitlich eng begrenzten Zeitfenstern eine Vielzahl von solchen Hohlglaskörpern hergestellt werden können.

Im sogenannten Press-Blas-Verfahren zur Herstellung von Hohlglaskörpern ist es üblicherweise vorgesehen, den Pegel und dessen runden Pegelkopf in eine bestimmte Position durch das Antriebsmittel anzuheben und den Vorformer gemeinsam mit dem Mündungswerkzeug aufzusetzen. Das Mündungswerkzeug weist eine runde Innenkontur auf. Der Durchmesser des Pegelkopfes ist kleiner bemessen als der Innendurchmesser des Mündungswerkzeuges, so dass der Pegelkopf das Mündungswerkzeug durchgreifen kann, ohne dieses zu beschädigen. Der Abstand zwischen der Innenkontur des Mündungswerkzeuges und der Außenkontur des Pegelkopfes entspricht nach dem Herstellungsverfahren der Wandstärke des Hohlglaskörpers. Sobald der Vorformer und das Mündungswerkzeug mittels eines verschwenkbar an der IS-Maschine angebrachten Greifarmes aufgesetzt sind, wird durch eine in dem Vorformer vorgesehene Durchgangsöffnung ein Glastropfen eingefüllt, der auf dem Pegelkopf aufliegt. Nach dem Einfüllen des erhitzten Glases wird die Durchgangsöffnung mittels eines Vorformbodens verschlossen und der Pegel durch ein Antriebsmittel in Richtung des Mündungswerkzeuges bzw. des Vorformbodens zugestellt. Somit presst der Pegel in den flüssigen Glastropfen eine vorgegebene Kontur ein, die anschließend, beispielsweise bei einer Flasche, als Ausgussöffnung vorgesehen ist. Sobald dieser Pressvorgang beendet ist, wird der Pegel durch das Antriebsmittel von einem oberen Totpunkt in einen unteren Totpunkt überführt und der Greifarm nimmt das Mündungswerkzeug und das darin eingepresste Glas als Vorform zu einer benachbarten Bearbeitungsstation, an der anschließend mittels Ausblasen mit Pressluft die endgültige Kontur des Hohlglaskörpers erzeugt wird.

Im sogenannten Blas-Blas-Verfahren weist der Pegel mindestens eine Druckluftleitung auf. Der Pegel wird derart in Richtung des Mündungswerkzeuges und durch diesen zugestellt, dass in dem Glastropfen eine Mulde entsteht, in die anschließend Druckluft eingeblasen wird, so dass mit Hilfe der Druckluft eine Verformung des Glastropfens erzeugt ist und sich die Konturen an dem Hohlglaskörper ergeben.

Diese Verfahrensabläufe und der Einsatz von sogenannten IS-Maschinen haben sich in der Praxis zur Massenfertigung von Hohlglaskörpern bewährt. Es ist jedoch nicht bekannt, eine unrunde oder nicht-rotationssymmetrische Innenkontur in die Vorform des Hohlglaskörpers mit Hilfe eines entsprechend ausgestalteten Pegelkopfes einzuarbeiten. Auch ist es nicht bekannt, die Außenkontur der Vorform des Hohlglaskörpers in einer beliebigen geometrischen Gestaltung um die Innenkontur auszurichten.

Es ist daher Aufgabe der Erfindung, eine Vorrichtung der eingangs genannten Gattung zur Verfügung zu stellen, mit der es möglich ist, nahezu beliebige geometrische Konturen in einen Glastropfen mit Hilfe einer IS-Maschine einzuformen, um anschließend in einem weiteren Bearbeitungsschritt an der IS-Maschine den Hohlglaskörper in seiner endgültigen geometrischen Ausgestaltung zu fertigen, ohne dass bei dem Presshub des Pegels bzw. dessen Pegelkopfes und dem Mündungswerkzeug Beschädigungen entstehen.

Diese Aufgabe ist erfindungsgemäß durch die Merkmale des kennzeichnenden Teils des Patentanspruchs 1 gelöst.

Weitere vorteilhafte Weiterbildungen der Erfindung ergeben sich aus den Unteransprüchen.

Dadurch, dass der Pegel in einer vorgegebenen Position lagerorientiert in dem Führungsrohr eingesetzt ist, und dadurch, dass in der Außenkontur des Führungsrohres eine Führungseinrichtung, die mit einer Positionierungseinrichtung, die an der Innenwand des Positionierungsringes angearbeitet ist, zusammenwirkt, ist der Pegel, das Führungsrohr und der Positionierungsring an der IS-Maschine ausgerichtet, die als Bezugspunkt dient. Somit kann an dem Pegel ein Pegelkopf angearbeitet werden, der eine nahezu beliebige Außenkontur, beispielsweise ein Oval, eine Ellipse oder konkav bzw. konvex gekrümmt oder wellenförmig ausgestaltet ist, um einen Hohlglaskörper zu fertigen, dessen Innenkontur im Bereich der Öffnung unrund oder nicht-rotationssymmetrisch gestaltet ist.

Da das Mündungswerkzeug über den Vorformer und den Greifarm lagerorientiert ausgerichtet und während des Bearbeitungsprozesses gehalten ist und der Greifarm an der IS-Maschine angelenkt ist, liegt auch für das Mündungswerkzeug eine bezogen auf die IS-Maschine ausgerichtete Position vor, so dass der Pegelkopf und das Mündungswerkzeug derart zueinander ausgerichtet sind, dass der Pegelkopf das Mündungswerkzeug nicht beschädigt, vielmehr in dieses eintaucht, und folglich die Konturen des Mündungswerkzeuges und des Pegelkopfes den Verlauf der Wand eines Hohlglasbehälters im Bereich dessen Öffnung erzeugen.

In der Zeichnung ist ein erfindungsgemäßes Ausführungsbeispiel dargestellt, das nachfolgend näher erläutert ist.

Im Einzelnen zeigt:
- Figur 1: eine Vorrichtung, bestehend aus einem Führungsrohr, in dem ein Pegel axial beweglich eingesetzt ist und aus einem Mündungswerkzeug, zwischen denen eine erhitzte Glasmasse eingefüllt ist, zur Bildung eines Hohlglaskörpers mit einer viereckigen Ausgussöffnung, in Explosionsdarstellung;
- Figur 2a: die Vorrichtung gemäß Figur 1, im unteren Totpunkt, im Schnitt;
- Figur 2b: die Vorrichtung gemäß Figur 2a, mit eingefülltem Glastropfen und einem aufgesetzten Vorformer, in angehobenem Zustand;
- Figur 2c: die Vorrichtung und den Vorformer gemäß Figur 2b im oberen Totpunkt;
- Figur 3a: den nach den Verfahrensschritten der Figuren 2a bis 2c hergestellten Hohlglaskörper mit einer viereckigen Ausgussöffnung, in perspektivischer Ansicht;
- Figur 3b bis 3d: verschiedene geometrische Verläufe der Wand des Hohlglasbehälters im Bereich der Öffnung in Draufsicht; und
- Figur 4: den Pegel gemäß Figur 1, in perspektivischer Ansicht.

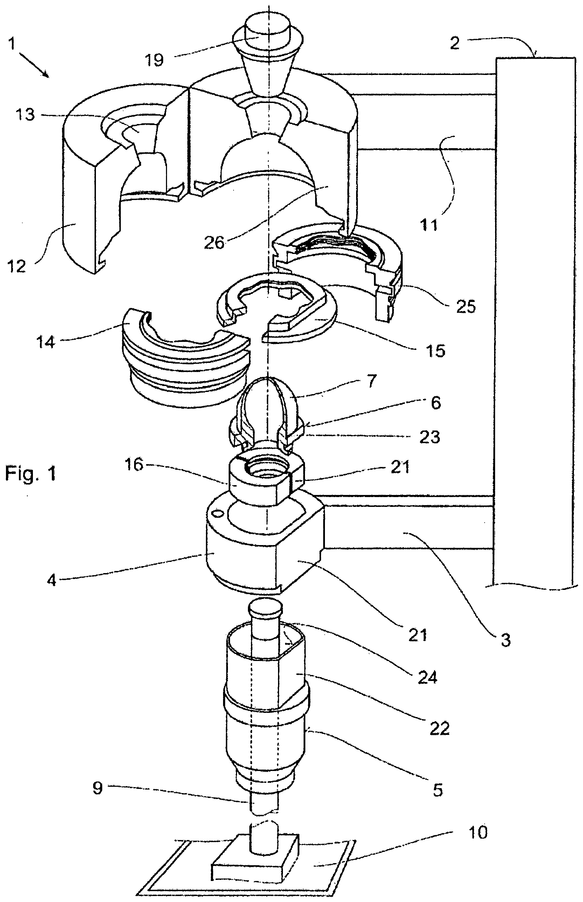

In Figur 1 ist eine Vorrichtung 1 zum Pressen eines erhitzten Glastropfens 27 gezeigt, aus dem in einem ersten Verfahrensschritt eine Vorform 28 und durch einen zweiten Verfahrensschritt ein Hohlglaskörper 30 an einer sogenannten IS-Maschine 2 entsteht. Die IS-Maschine 2 dient als Bezugspunkt zum Ausrichten der die Vorrichtung 1 bildenden Bauteile. Durch die IS-Maschine 2 wird an den Glastropfen 27 im Press-Blas-, Engmund-Press-Blas- oder Blas-Blas-Prozess der Glashohlkörper 30 mit Hinterschneidungen geformt.

Die IS-Maschine 2 besteht aus einem Haltearm 3, an dem ein Positionierungsring 4 befestigt ist. Der Positionierungsring 4 weist eine an dessen Innenmantelfläche angearbeitete Positionierungseinrichtung 21 in Form einer Anlagefläche auf. Durch den Positionierungsring 4 ist ein Führungsrohr 5 umgriffen und lageorientiert gehalten. Zur Ausrichtung des Führungsrohres 5 ist an dieses eine Führungseinrichtung 22 in Form einer Anlagefläche angearbeitet, so dass im montierten Zustand die Positionierungseinrichtung 21 und die Führungseinrichtung 22 fluchtend übereinander liegen und somit durch den Positionierungsring 4 die lageorientierte Ausrichtung und Fixierung des Führungsrohres 5 vorgegeben ist.

An der Innenmantelfläche des Führungsrohres 5 ist eine Positionierungseinrichtung 24 in Form einer Anlagefläche angearbeitet, durch die ein in dem Führungsrohr 5 axial verschiebbarer Pegel 6 gehalten ist, da an dem Pegel 6 eine Führungseinrichtung 23 in Form einer Anlagefläche angearbeitet ist, die im montierten Zustand fluchtend über der Positionierungseinrichtung 24 des Führungsrohres 5 angeordnet ist, so dass durch das Zusammenwirken der Führungseinrichtung 23 und der Positionierungseinrichtung 24 der Pegel 6, bezogen auf die IS-Maschine 2, ausgerichtet und in dem Führungsrohr 5 lageorientiert gehalten ist.

Zur Bildung der Positionierungseinrichtungen 21 und 24 sowie der Führungseinrichtungen 22 und 23 könnten auch andersartig ausgestaltete Bauteile verwendet werden. Beispielsweise ist es ohne weiteres möglich, in den Positionierungsring 4, das Führungsrohr 5 und den Pegel 6 linear Führungsnuten einzuarbeiten und zwischen diesen Bauteilen ein Glotz oder eine Schiene in die jeweilige Linearführungsnut einzusetzen, so dass durch diese eine in Umfangsrichtung verlaufende Kraft aufgenommen und abgestützt ist und durch diese auch eine lageorientierte Positionierung des Pegels 6 zu dem Führungsrohr 5 und von dem Führungsrohr 5 zu dem Positionierungsring 4 erreicht ist.

Um den Pegel 6 axial in dem Führungsrohr 5 bewegen zu können, ist dieser mit einer Kolbenstange 9 verbunden, die in trieblichem Wirkkontakt mit einem Antriebsmittel 10, beispielsweise einem pneumatisch oder hydraulisch betriebenen Kolben, steht. Mit Hilfe des Antriebsmittels 10 kann somit die Kolbenstange 9 und der Pegel 6 hubweise zwischen einem unteren und einem oberen Totpunkt betätigt werden.

Um den Pegel 6 möglichst ohne großen Zeitverlust austauschen zu können, ist ein Pegeladapter 16 vorhanden, der aus zwei Halbschalen gebildet ist, die von dem Pegel 6 abgenommen werden können, wenn dieser aus dem Führungsrohr 5 herausgefahren wird. Durch den Pegeladapter 16 ist der Pegel 6 mit der Kolbenstange 9 trieblich verbunden.

In Figur 1 ist des Weiteren zu entnehmen, dass an dem Pegel 6 ein Pegelkopf 7 angeformt oder angearbeitet ist, dessen Außenkontur viereckig ausgestaltet ist.

Zur Verformung des Glastropfens 27 ist ein mit dem Pegelkopf 7 zusammenwirkendes Mündungswerkzeug 14 vorzusehen, das aus zwei Halbschalen gebildet ist, die von einem zweiteilig ausgestalteten Vorformer 12 in montiertem Zustand umgriffen sind. Die beiden Hälften des Mündungswerkzeuges 14 sind vom Deckelring 15 umschlossen, die durch einen Vorformer 12 mit einer Führungseinrichtung 26 zueinander ausgerichtet sind. Der Vorformer 12 ist mittels eines an der IS-Maschine 2 verschwenkbar angelenkten Greifarm 11 und zu der IS-Maschine 2 als Bezugspunkt ausgerichtet. Darüber hinaus weist die Innenmantelfläche des Vorformers 12 eine Führungseinrichtung 26 auf, die mit einer an dem Mündungswerkzeug 14 auf dessen Außenwand angearbeiteten Positionierungseinrichtung 25 derart zusammenwirkt, dass das Mündungswerkzeug 14 lageorientiert in dem Vorformer 12 gehalten ist und somit die Position bzw. die Ausrichtung des Mündungswerkzeuges 14 über den Deckelring 15 und den Vorformer 12 und den Greifarm 11, bezogen auf die IS-Maschine 2, exakt eingestellt werden kann, so dass der Pegel 6 bzw. dessen Pegelkopf 7 zu dem Mündungswerkzeug 14 ausgerichtet ist und der Pegelkopf 7 in das Mündungswerkzeug 14 eintauchen kann, ohne dass die Außenkontur des Pegelkopfes 7 an die Innenwand des Mündungswerkzeuges 14 stößt. Zwischen dem Mündungswerkzeug 14 und dem Pegelkopf 7 ist nämlich ein Luftspalt vorzusehen, der der Wandstärke des Hohlglaskörpers 30 entspricht.

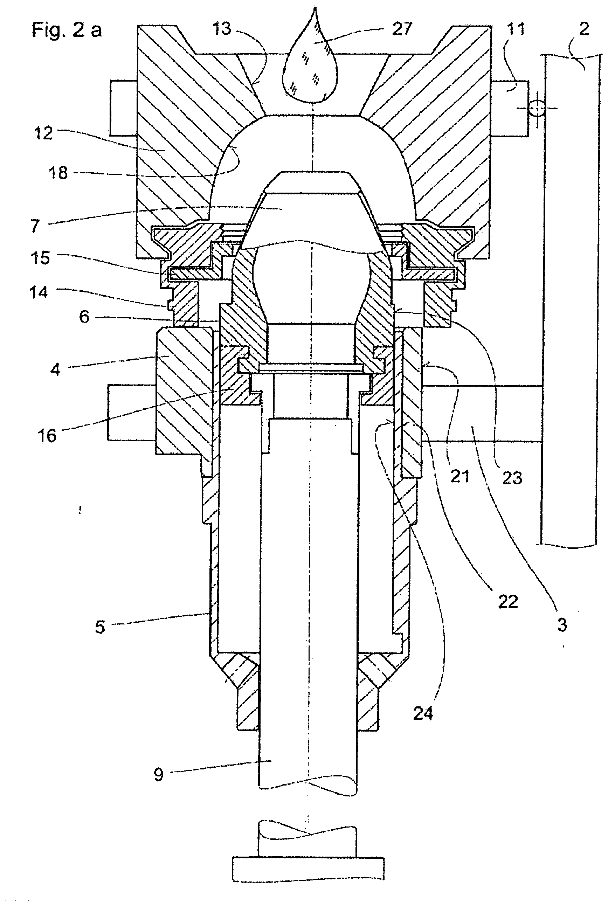

In Figur 2a ist der Pegel 6 aus dem unteren Totpunkt in eine mittlere Position angehoben und der Vorformer 12 sowie das Mündungswerkzeug 14 sind auf dem Pegel 6 aufgesetzt und umgreifen diesen. In den Vorformer 12 ist eine Durchgangsöffnung 13 eingearbeitet, durch die der Glastropfen 27 auf den Pegelkopf 7 eingefüllt ist.

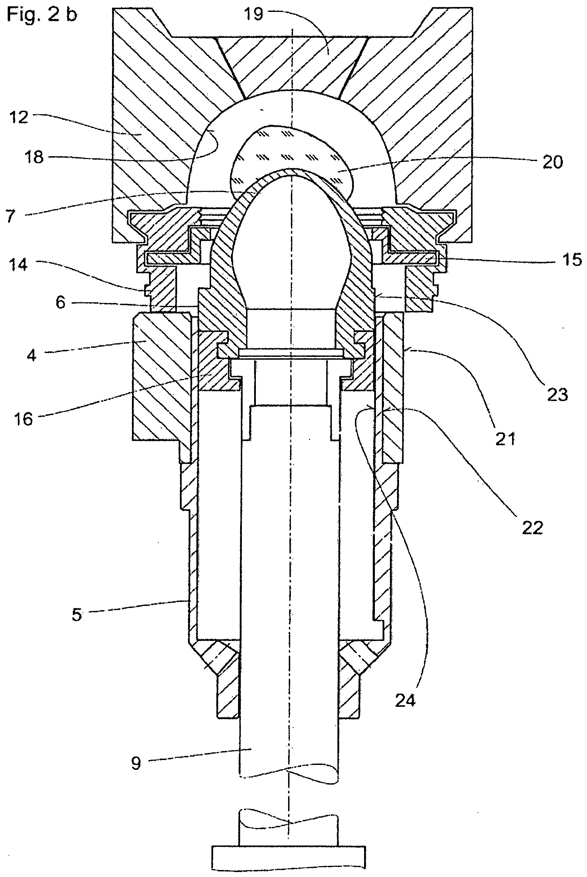

In Figur 2b ist zu entnehmen, dass die Durchgangsöffnung 13 mittels eines Vorformbodens 18 verschlossen ist, um beim Zustellen des Pegelkopfes 7 eine vollständig geschlossene Anschlagsfläche vorzusehen, an der der Glastropfen 27 anliegt.

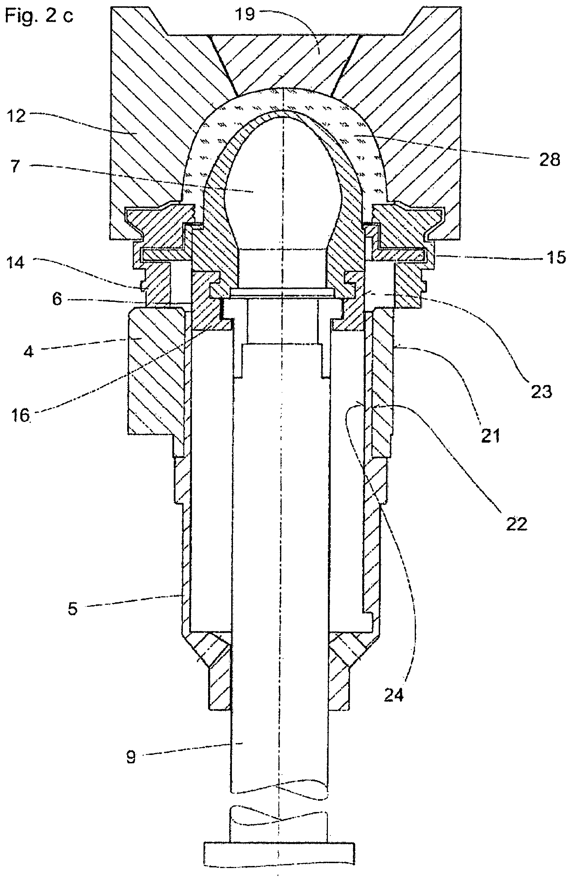

In Figur 2c ist gezeigt, dass der Pegel 6 in den oberen Totpunkt überführt bzw. zugestellt ist und dass durch diese Hubbewegung aus dem Glastropfen 27 eine Vorform 28 hergestellt ist. Die Außenkontur des Pegelkopfes 7 ist dabei in die Vorform 28 eingedrückt, so dass die viereckige Außenkontur des Pegelkopfes 7 in der Vorform 28, und zwar in deren Innenwand, eingearbeitet ist.

Die Innenkontur des Mündungswerkzeuges 14 sowie die Innenkontur des Vorformers 12 beeinflussen die Außenkontur der Vorform 28. Insbesondere weist das Mündungswerkzeug 14 einen umlaufenden Ring auf, der als Hinterschneidung in die Außenwand der Vorform 28 eingearbeitet ist und bei dem hergestellten Hohlglaskörper 30 als Haltering eines Kronkorkens dienen kann.

Der Vorformer 12 wird nach dem Presshub des Pegels 6 abgenommen, der Pegel 6 fährt zunächst in den unteren Totpunkt und der Greifarm 11 überführt das Mündungswerkzeug 14 und die Vorform 28, die durch das Mündungswerkzeug 14 gehalten ist, zu einer benachbarten Bearbeitungsstation der IS-Maschine 2, an der anschließend der Hohlglaskörper 30 im Blasverfahren mit Hinterschneidungen hergestellt ist.

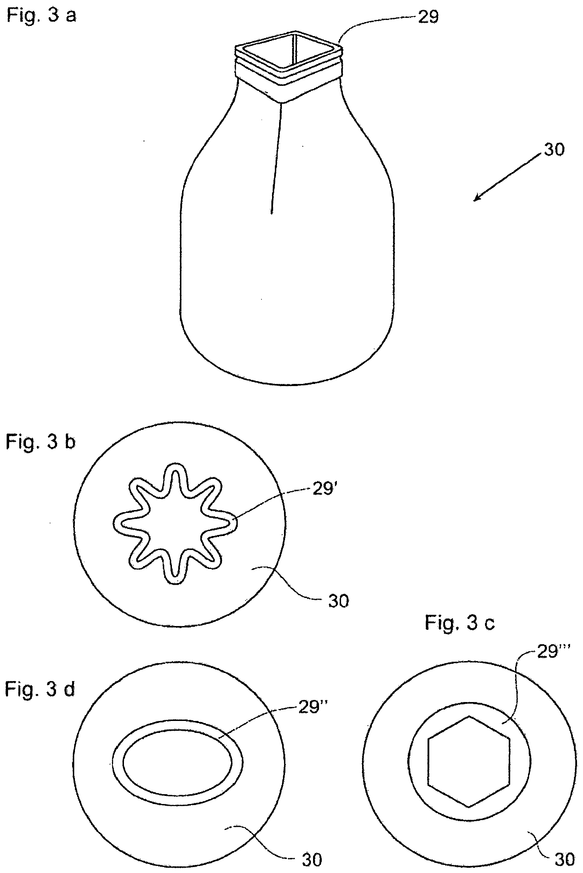

In Figur 3a ist der Hohlglaskörper 30 in Form einer Flasche abgebildet. Der Hohlglaskörper 30 weist eine viereckige Ausgussöffnung 29 auf, da gemäß den Figuren 1 bis 2c die Außenkontur des Pegelkopfes 7 viereckig ausgestaltet ist und diese die Innenwandung der Ausgussöffnung 23 erzeugt. Das Mündungswerkzeug 14 ist korrespondierend zu der Außenkontur des Pegelkopfes 7 ausgerichtet gewesen, so dass sich insgesamt eine viereckförmige Außenkontur der Ausgussöffnung 29 des Hohlglaskörpers 30 erzeugen lässt.

In Figur 3b ist gezeigt, dass die Innenkontur des Hohlglaskörpers 30 als Blüte oder wellenförmig ausgestaltet ist und dass die Außenkontur des Hohlglaskörpers 30 rund um die derart ausgestaltete Ausgussöffnung 29 angeordnet ist. Demnach hat der Pegelkopf 7 die wellenförmige oder blütenförmige Außenkontur aufgewiesen und die Innenkontur des Mündungswerkzeuges 14 ist rund ausgestaltet.

In Figur 3c ist eine sechseckige Innenkontur mit einer runden, diese umschließende Außenkontur des Hohlglaskörpers 30 gezeigt, so dass beispielsweise eine beliebig geometrisch ausgestaltete Innenkontur an einem Hohlglaskörper 30 angearbeitet werden kann, die dann gleichwohl von einem runden Kronkorken verschlossen werden kann.

In Figur 3d ist eine ovale oder elliptische Ausgestaltung der Innen- und Außenkontur der Ausgussöffnung 29 eines Hohlglasartikels 30 zu entnehmen.

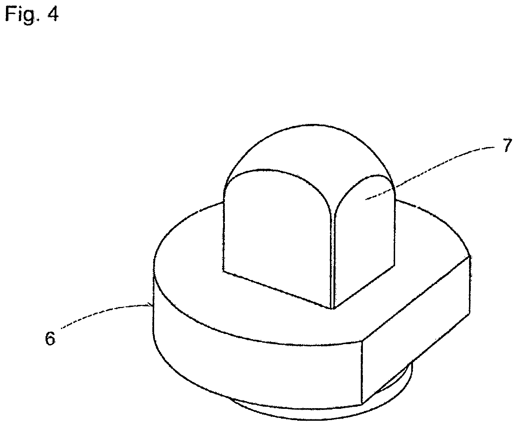

In Figur 4 ist in vergrößerter Darstellung der Pegel 6 und der Pegelkopf 7 dargestellt. Der Pegelkopf 7 weist eine viereckförmige, vorzugsweise quadratische Außenkontur auf, die als nicht-rotationssymmetrisch anzusehen ist. Der Pegelkopf 7 kann dabei jede beliebige nicht-rotationssymmetrische Außenkontur einnehmen; diese kann beispielsweise mehreckig, oval, elliptisch, konkav bzw. konvex gekrümmt oder wellenförmig gestaltet sein. Die bekannten Innenkonturen, die rund ausgestaltet sind, werden dagegen als rotationssymmetrische Innenkontur verstanden. Es ist erforderlich, dass mindestens eine Symmetrieebene vorhanden ist, die als Teilungsebene für das Mündungswerkzeug 14 und den Vorformer 12 dienen.

## Patentansprüche

1. Vorrichtung (1) an einer IS-Maschine (2) zum Pressen einer Vorform (28) aus einem erhitzten Glastropfen (27), mit einem zweiteilig ausgestalteten Vorformer (12), einem aus zwei Halbschalen ausgebildeten Mündungswerkzeug (14) und einem Pegel (6) mit einem Pegelkopf (7), der mittels eines Antriebsmittels (10) hubweise zwischen einem unteren Totpunkt und einem oberen Totpunkt betätigbar ist, **dadurch gekennzeichnet, dass** der Pegelkopf (7) eine nicht-rotationssymmetrische Außenkontur aufweist, mittels der ein aus dem erhitzten Glastropfen (27) hergestellter Hohlglaskörper (30) im Bereich seiner Öffnung (29) mit einer nicht-rotationssymmetrischen Innenkontur gestaltbar ist.

2. Vorrichtung nach Anspruch 1, bei der bei der nichtrotationssymmetrischen Außenkontur eine Symmetrieebene vorhanden ist, die als Teilungsebene für das Mündungswerkzeug (14) und in zweiteilig ausgestalteten Vorformer (12) dient.

3. Vorrichtung nach Anspruch 1 oder 2, bei der die Innenkontur des Mündungswerkzeugs (14) an die Außenkontur des Pegelkopfes (7) angepasst ist.

4. Vorrichtung nach Anspruch 1 oder 2, bei der die Innenkontur des Mündungswerkzeugs (14) rund ausgestaltet ist.

## Claims

1. A device (1) on an IS machine (2) for pressing a preform (28) from a heated gob of glass (27), having a preformer (12) with a two-piece configuration, an aperture tool (14) constructed from two half-shells and a plunger (6) with a plunger head (7) which is movable by means of a drive means (10) in a stroke arrangement between a lower dead centre position and an upper dead centre position, **characterized in that** the plunger head (7) comprises a non-rotationally symmetrical outer contour by means of which a hollow glass body (30) with a non-rotationally symmetrical inner contour produced from the heated gob of glass (27) can be formed in the region of its aperture (29) .

2. The device as claimed in claim 1, in which the non-rotationally symmetrical outer contour has a plane of symmetry which acts as a parting plane for the aperture tool (14) and for the preformer (12) with a two-piece configuration.

3. The device as claimed in claim 1 or claim 2, in which the inner contour of the aperture tool (14) is aligned with the outer contour of the plunger head (7).

4. The device as claimed in claim 1 or claim 2, in which the inner contour of the aperture tool (14) is round in configuration.

## Revendications

1. Dispositif (1) équipant une machine à sections individuelles (2) lequel permet de presser une ébauche (28) constituée d'une goutte de verre (27) chauffée et lequel comporte un organe de préformage (12) réalisé en deux pièces, un outil d'embouchure (14) formé par deux demi-coques, et un élément mobile (6) pourvue d'une tête (7) pouvant être actionné, à l'aide d'un moyen d'entraînement (10), de manière à effectuer une course entre un point mort inférieur et un point mort supérieur, **caractérisé en ce que** la tête (7) présente un contour extérieur sans symétrie de révolution permettant de conférer à l'ouverture (29) d'un corps creux en verre (30), réalisé à partir de la goutte de verre (27) chauffée, un contour intérieur sans symétrie de révolution.

2. Dispositif selon la revendication 1, ledit contour extérieur sans symétrie de révolution présentant un plan de symétrie servant de plan de séparation pour l'outil d'embouchure (14) et l'organe de préformage (12) réalisé en deux pièces.

3. Dispositif selon les revendications 1 ou 2, le contour intérieur de l'outil d'embouchure (14) étant adapté au contour extérieur de la tête (7).

4. Dispositif selon les revendications 1 ou 2, le contour intérieur de l'outil d'embouchure (14) ayant une forme ronde.
